# EUROPÄISCHE PATENTANMELDUNG

(11) **EP 1 247 628 A2**
(43) Veröffentlichungstag der Anmeldung: **09.10.2002**
(21) Anmeldenummer: 02007109.8
(22) Anmeldetag: 28.03.2002
(51) Int. Cl.: B27M 3/00, B23Q 16/00

(54) **Anschlageinrichtung für eine Plattenverleimmaschine**

(30) Priorität: 04.04.2001 DE 10116695
(71) Anmelder: GreCon Dimter Holzoptimierung Süd GmbH & Co. KG, 89257 Illertissen (DE)
(72) Erfinder: Jung, Erhard, 89281 Altenstadt (DE)
(74) Vertreter: Kohl, Karl-Heinz

(57) **Zusammenfassung**

Die Anschlageinrichtung hat einen Anschlag (14) für Hölzer und einen Auswerfer, mit dem die Hölzer (2) quer zu ihrer Zuführrichtung verschiebbar sind. Um die Anschlageinrichtung (5) so auszubilden, daß die Hölzer (2) einfach zugeführt und zur Weiterverarbeitung abtransportiert werden können, weist der Anschlag (14) wenigstens ein Anschlagelement auf, das in Auswerfrichtung verschiebbar und um eine quer zur Auswerfrichtung liegende Achse schwenkbar ist. Durch diese Schwenkbewegung wird der Anschlag mit dem Anschlagelement in die Ausgangslage zurückgefahren, ohne den Auswerfvorgang durch den Auswerfer zu beeinträchtigen.

## Beschreibung

Die Erfindung betrifft eine Anschlageinrichtung für eine Plattenverleimmaschine nach dem Oberbegriff des Anspruches 1.

Mit Plattenverleimmaschinen werden aus einzelnen lamellenförmigen Hölzern Platten gebildet, indem diese an einer Längsseite mit Leim versehen und mit ihren Längsseiten gegeneinander gedrückt werden. Die Hölzer werden einzeln nacheinander in die Maschine so weit transportiert, daß sie mit ihrer Stirnseite am Anschlag zur Anlage kommen. Mit dem Auswerfer wird dann jedes Holz einzeln quer zu seiner Zuführrichtung zur Bildung der Platte verschoben.

Der Erfindung liegt die Aufgabe zugrunde, die gattungsgemäße Anschlageinrichtung so auszubilden, daß die Hölzer einfach zugeführt und zur Weiterverarbeitung abtransportiert werden können.

Diese Aufgabe wird bei der gattungsgemäßen Anschlageinrichtung erfindungsgemäß mit den kennzeichnenden Merkmalen des Anspruches 1 gelöst.

Bei der erfindungsgemäßen Anschlageinrichtung werden die Hölzer zunächst so weit zugeführt, bis sie am Anschlagelement des Anschlages zur Anlage kommen. Der Anschlag wird anschließend synchron zur Auswurfbewegung eines Schiebers in Auswerfrichtung des Holzes verschoben und dabei das Anschlagelement um die quer zur Auswerfrichtung liegende Achse geschwenkt. Durch diese Schwenkbewegung wird erreicht, daß der Anschlag mit dem Anschlagelement in die Ausgangslage zurückgefahren werden kann, ohne den Auswerfvorgang durch den Auswerfer zu beeinträchtigen.

Bei einer Ausbildung entsprechend Anspruch 7 hat die Anschlageinrichtung den Anschlag sowie wenigstens zwei Auswerfer. Ein Schieber wird dann nicht mehr als Auswerfer genutzt. Der Anschlag und die Auswerfer sind gemeinsam quer zur Auswerfrichtung verstellbar, um auf die entsprechende Auswurfposition zu fahren und um diese Baueinheiten auf die jeweilige Holzlänge einzustellen. Der weitere Auswerfer läßt sich mit dem Antrieb kuppeln, wenn er zusammen mit dem Anschlag und dem anderen Auswerfer in eine Endlage verfahren wird. In dieser Endlage wird der weitere Auswerfer vom Antrieb entkoppelt, so daß der Anschlag und der andere Auswerfer auf die entsprechende Längenposition gefahren werden können, während der weitere Auswerfer in seiner Position stehen bleibt. Anschließend kann er mit dem Antrieb wieder gekuppelt werden, so daß er mitgeführt wird, wenn der Anschlag und der andere Auswerfer in die Auswurfposition gefahren werden.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in schematischer Darstellung eine Draufsicht auf eine Plattenverleimmaschine, vor der eine erfindungsgemäße Anschlageinrichtung angeordnet ist,
- Fig. 2: eine Draufsicht auf einen Teil der erfindungsgemäßen Anschlageinrichtung,
- Fig. 3: eine Rückansicht eines Teils der erfindungsgemäßen Anschlageinrichtung,
- Fig. 4: in Seitenansicht einen motorisch verstellbaren Schwenkanschlag der erfindungsgemäßen Anschlageinrichtung,
- Fig. 5: in Seitenansicht einen verstellbaren Schwenkanschlag der erfindungsgemäßen Anschlageinrichtung,
- Fig. 6: in Seitenansicht einen Auswerfer der erfindungsgemäßen Anschlageinrichtung.

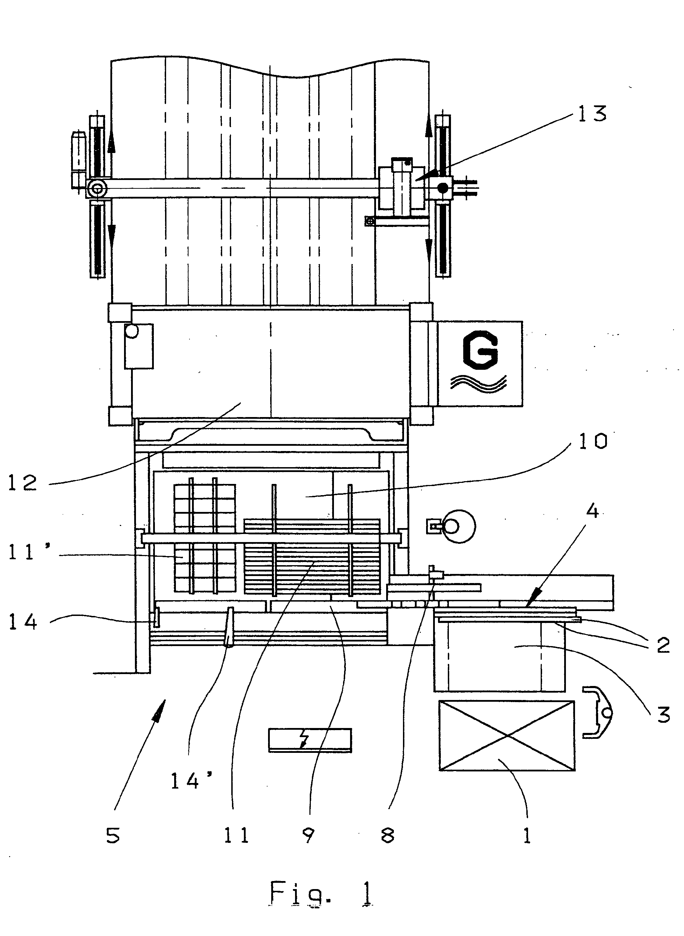

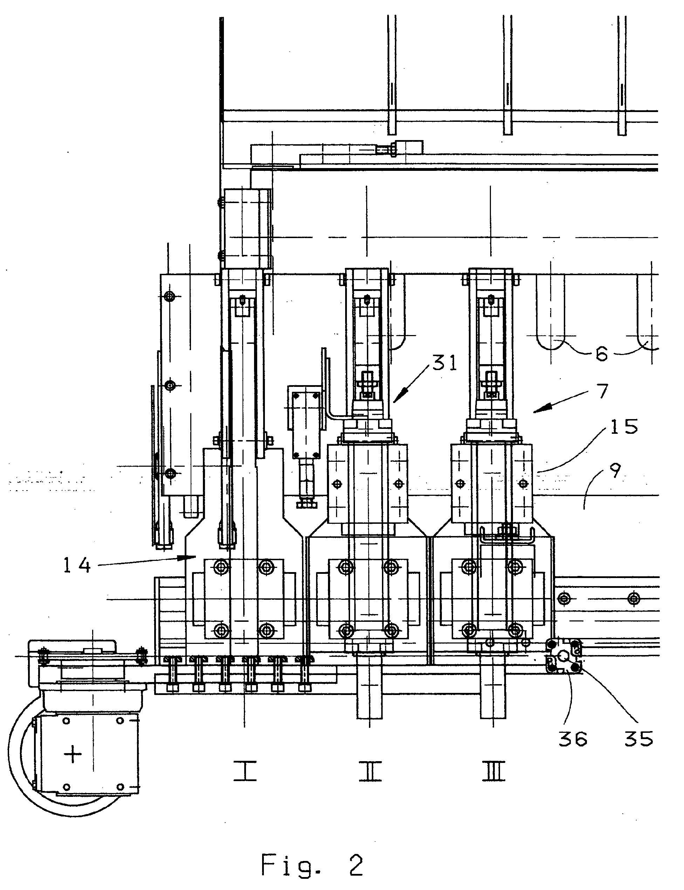

Die Plattenverleimmaschine gemäß Fig. 1 dient dazu, aus einzelnen Hölzern Platten herzustellen. Von einem Speicher oder Magazin 1 entnimmt eine Bedienungsperson lamellenförmige Hölzer 2 und legt sie auf eine Quertransporteinrichtung 3, welche die Hölzer 2 gegen einen Anschlag 4 quer zu ihrer Längsrichtung fördert. Hier werden die Hölzer 2 von einer Transporteinrichtung 6 (Fig. 2) übernommen, welche die Hölzer 2 nacheinander in ihrer Längsrichtung einer Anschlageinrichtung 5 zuführt. Bei diesem Transport werden die Hölzer 2 an einer Längsseite mit einem Beleimgerät 8 mit Leim versehen. Sobald die Hölzer 2 in noch zu beschreibender Weise an dem jeweiligen Anschlag der Anschlageinrichtung 5 anliegen, wird jedes Holz 2 in der Grundausführung mit einem Schieber 9 quer zu seiner Längsrichtung auf einen Querförderer 10 geschoben, auf dem die mit ihren Längsseiten aneinanderliegenden Hölzer 2 zu einem plattenförmigen Lamellenpaket 11 in bekannter Weise zusammengestellt werden. Mit dem Schieber 9 wird das jeweils nächste Holz 2 mit seiner beleimten Längsseite an das auf dem Querförderer 8 schon befindliche Holz 2 bzw. Paket 11 in bekannter Weise angedrückt. Auf diese Weise werden auf dem Querförderer 10 die jeweiligen Pakete 11 zusammengestellt. Bei Anlagen mit hoher Leistung, d.h. mehr als zum Beispiel 20 Teile pro Minute werden in die Maschine gefahren, wird die Auswurfbewegung von zwei Auswerfern 31, 15 übernommen. Deren Finger 33 können beim Zurückfahren hochschwenken; damit kann das nächste Holz bereits zu einem Anschlag 14 fahren. Beim Andrücken des jeweils nächsten Holzes 2 an das schon bestehende Paket 11 wird in bekannter Weise ein Gegendruck erzeugt, so daß die einzelnen Hölzer des jeweiligen Paketes 11 fest zusammengepreßt werden.

Sobald das Paket 11 in der gewünschten Länge zusammengestellt ist, wird es mit dem Schieber 9 in eine Presse 12 geschoben, in dem die Platte 11 mit einem nach unten sich bewegenden Pressenstempel gepreßt wird. Damit der Leim zwischen den Hölzern 2 rasch trocknet, wird bei diesem Preßvorgang auch Wärme eingesetzt.

Sobald das Paket 11 ausreichend gepreßt ist, wird es freigegeben und das während des Preßvorganges auf dem Querförderer 10 zusammengestellte neue Paket 11 in die Presse 12 geschoben. Dabei wird das in der Presse 12 zuvor gepreßte und getrocknete Paket 11 durch das nachfolgende, noch zu verpressende Paket herausgeschoben und in eine Sägeeinrichtung 13 geschoben. Hier wird das Paket 11 gegebenenfalls quer zu seiner Längsrichtung gesägt.

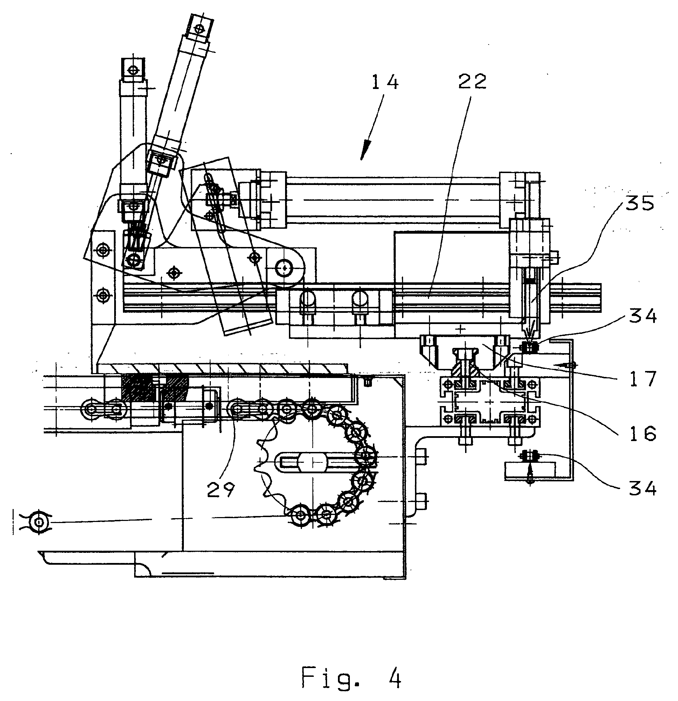

Die Anschlageinrichtung 5 dient dazu, die Hölzer 2 in der richtigen Lage zu positionieren, bevor sie mit dem Schieber 9 bzw. den Auswerfern 31/15 auf den Querförderer 10 geschoben werden. Die Anschlageinrichtung 5 hat den Anschlag 14, der im Transportweg der Hölzer 2 liegt. Er ist, wie Fig. 1 zeigt, im Ausführungsbeispiel an dem in Transportrichtung vorderen Endbereich der Transporteinrichtung angeordnet. Ein Auswerfer 15 sitzt auf einer Linearführung 16, die sich parallel zur Transportrichtung der Hölzer 2 in der Transporteinrichtung 6 erstreckt (Fig. 4). Der Anschlag 14 ist mit wenigstens einem Schuh 17 versehen, mit dem er formschlüssig auf der Linearführung 16 sitzt. Der Anschlag 14 kann manuell längs der Linearführung 16 in die gewünschte Anschlagposition gefahren und arretiert werden, beispielsweise mit einer Klemmschraube. Auf diese Weise können auf der Linearführung 16 selbstverständlich auch mehrere Anschläge 14 aufgebaut sein. Diese Anschläge 14 werden auf die Länge der jeweils zu verarbeitenden Hölzer 2 eingestellt. Fig. 1 zeigt den Fall, daß ein zweiter Anschlag 14' in eine Position eingestellt ist, in der er größeren Abstand vom Anschlag 14 hat. Dementsprechend werden an dem Anschlag 14' die für das Paket 11 vorgesehenen Hölzer 2 angehalten und mit dem Schieber 9 zur Bildung des Paketes 11 auf den Querförderer 10 geschoben. Der Anschlag 14 dient in diesem Falle als Anlage für wesentlich kürzere Hölzer 2, mit denen ein schmaleres Paket 11' zusammengestellt wird.

Selbstverständlich ist es auch möglich, den Anschlag 14 motorisch auf der Linearführung 16 in die gewünschte Position zu verfahren. In diesem Falle ist nur ein einziger Anschlag 14 notwendig, um unterschiedlich breite Pakete zusammenzustellen.

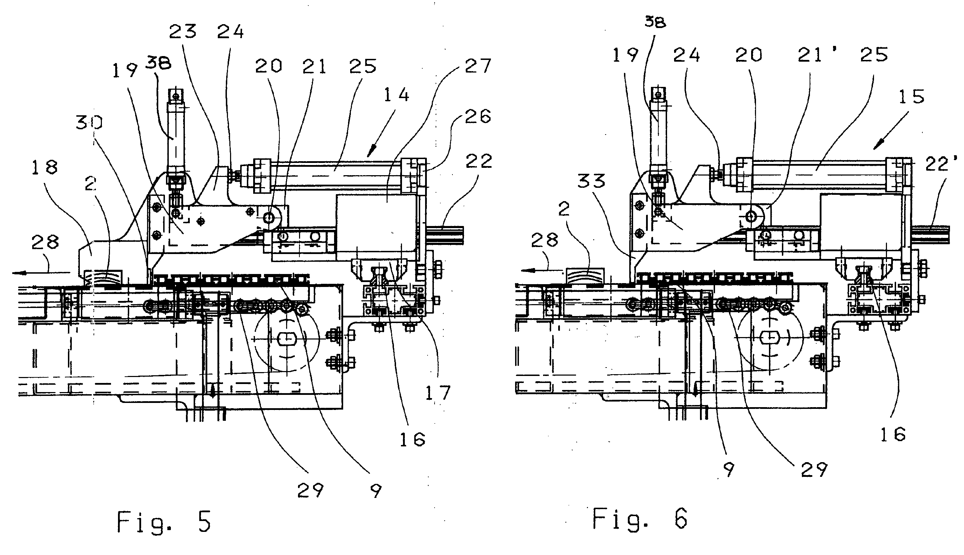

Der verstellbare Anschlag 14 hat, wie Fig. 5 zeigt, eine Anschlagplatte 18, die im Transportweg der Hölzer 2 liegt. Die Anschlagplatte 18 liegt senkrecht zur Transportrichtung der Hölzer 2. Die Anschlagplatte 18 ist an einem Arm 19 befestigt, der mit einem Ende um eine parallel zur Transportrichtung der Hölzer 2 liegende Achse 20 schwenkbar gelagert ist. Über diese Achse ist der Arm 19 mit einem Schlitten 21 gelenkig verbunden, der auf einer Linearführung 22 sitzt, die sich senkrecht zur Linearführung 16 erstreckt. Der Schlitten 21 hat einen aufwärts gerichteten Arm 23, an dem das Ende einer Kolbenstange 24 angreift, die in einem Zylinder 25 verschiebbar gelagert ist. Er ist mit seinem vom Arm 23 abgewandten Ende an einer Halterung 26 befestigt, die an einem Träger 27 des Anschlages 14 gehalten ist. An der Unterseite des Trägers 27 ist der Schuh 17 vorgesehen, mit dem der Anschlag 14 längs der Linearführung 16 verstellt werden kann.

Der Schwenkarm 19, der Schlitten 21 und die Kolben-Zylinder-Anordnung 24, 25 befinden sich im Bereich oberhalb des Schiebers 9. Die Anschlagplatte 18 liegt in Verschieberichtung 28 vor dem Schieber 9.

Sobald ein Holz 2 längs des Anschlages 4 (Fig. 1) in seiner Längsrichtung transportiert und an der Anschlagplatte 18 des Anschlages 14 zur Anlage gekommen ist, wird in der Grundausführung der Schieber 9 in Verschieberichtung 28 verschoben. Der Antrieb des Schiebers 9 erfolgt im Ausführungsbeispiel durch umlaufende Ketten 29, in die der Schieber 9 in bekannter Weise eingehängt ist. Sobald das Holz 2 mit seiner Stirnseite an der Anschlagplatte 18 des Anschlages 14 zur Anlage kommt, wird der Schieber 9 durch Antrieb der Ketten 29 in Verschieberichtung 28 verschoben. Hierbei greift der Schieber 9 zunächst an der Anschlagplatte 18 an. Sie ist vorteilhaft mit einer senkrecht abstehenden Lasche 30 versehen, die sich senkrecht zur Verschieberichtung 28 erstreckt und an welcher der Schieber 9 zur Anlage kommt. Über die Anschlagplatte 18 werden der Arm 19 und der Schlitten 21 in Verschieberichtung 28 mitgenommen. Der Schlitten 21 wird auf der Linearführung 22 zuverlässig verschoben, wobei die Kolbenstange 24 aus dem Zylinder 25 gezogen wird. Das Holz 2 bleibt zunächst liegen, bis der Schieber 9 an der Längsseite des Holzes 2 zur Anlage kommt und es beim weiteren Verschieben in Richtung 28 mitnimmt. Am Ende des Verschiebeweges wird der Arm 19 um die Achse 20 mit einer Kolben-Zylinder-Einheit 38 aufwärts geschwenkt, wie in Fig. 4 dargestellt ist. Durch die Schwenkbewegung kommt die Anschlagplatte 18 vom Schieber 9 frei. Die Kolbenstange 24 wird dann mit Druckmedium so beaufschlagt, daß sie in den Zylinder 25 zurückgeschoben wird. Der Arm 19 bleibt bei dieser Rückwärtsbewegung aufwärts geschwenkt. Mit einer gewissen Verzögerung wird der Schieber 9 ebenfalls in die in Fig. 5 dargestellte Ausgangslage zurückgeschoben. Anschließend wird der Arm 19 mit der Kolben-Zylinder-Einheit 38 in die Ausgangslage zurückgeschwenkt und der Schlitten 21 auf der Linearführung 22 zurückgefahren. Nunmehr kann das nächste Holz 2 zugeführt werden, bis es an der Anschlagplatte 18 zur Anlage kommt.

Mit dem Schieber 9 wird das jeweilige Holz 2, wenn die Anschlagplatte 18 hochgeschwenkt worden ist, noch so weit verschoben, daß es durch den Schieber 9 an das auf dem Querförderer 10 liegende Paket 11 angefügt wird.

Diese Anschlageinrichtung 5 ist für kleinere Leistungen der Plattenverleimmaschine geeignet, beispielsweise für die Zuführung von etwa 15 Hölzern pro Minute. Werden höhere Leistungen gefordert, beispielsweise bis zu 60 Hölzer pro Minute, muß das nächste Holz schon dann zugeführt werden, wenn der Anschlag durch den Schieber 9 in Richtung auf den Querförderer 10 verschoben worden ist.

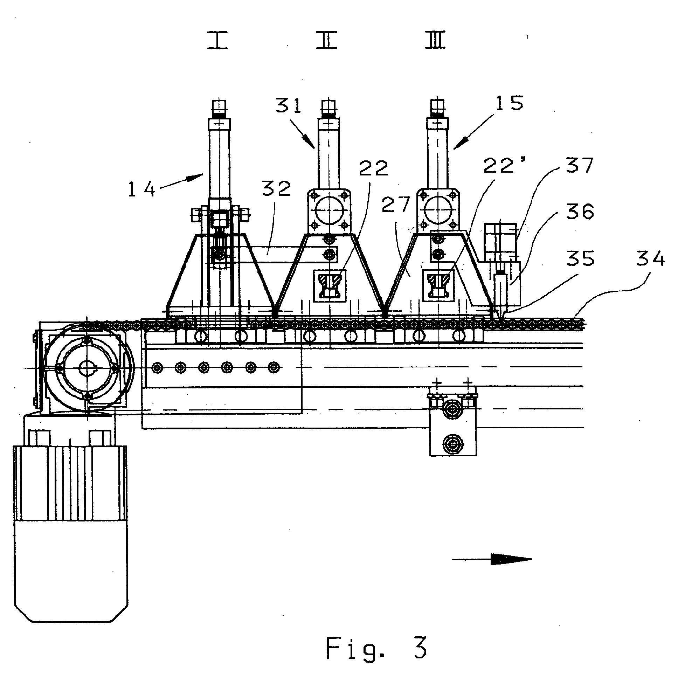

Für diesen Fall sind auf der Linearführung 16 der Anschlag 14 und zwei Auswerfer 15, 31 angeordnet. Wie Fig. 3 zeigt, bilden der Anschlag 14 und der Auswerfer 31 eine Baueinheit. Beide Bauteile 14, 31 sind über einen Querarm 32, der sich parallel zur Linearführung 16 erstreckt, fest miteinander verbunden. Der Auswerfer 15 ist weitgehend gleich ausgebildet wie der Anschlag 14 gemäß Fig. 5. Anstelle der Anschlagplatte hat der Auswerfer 15 (Fig. 6) einen nach unten abstehenden Finger 33, der bis nahe an die Auflagefläche der Hölzer 2 reicht. Im übrigen ist der Auswerfer 15 gleich ausgebildet wie der Anschlag 14 gemäß Fig. 5. Der Auswerfer 15 hat ebenfalls den Schlitten 21', der auf der Linearführung 22' verfahrbar ist. Außerdem sitzt der Auswerfer 15 auf der Linearführung 16, so daß er senkrecht zur Verschieberichtung 28 verstellt werden kann, um ihm auf unterschledliche Holzlangen einzustellen.

Wie die Fig. 2 und 3 zeigen, sitzen auf der Linearführung 16 nebeneinander der Anschlag 14 und die beiden Auswerfer 15, 31. Diese komplette Einheit kann motorisch längs der Linearführung 16 verstellt werden, um in die entsprechenden Auswurfpositionen zu verfahren. Der Anschlag 14 und der Auswerfer 31 werden hierbei, da sie über den Querarm 32 fest miteinander verbunden sind, gemeinsam verfahren. Der Auswerfer 15 wird auf die jeweilige Holzlänge eingestellt, indem er längs der Linearführung 16 in die notwendige Position verfahren wird.

Diese drei Einheiten 14, 31, 15 werden dann eingesetzt, wenn in der Zeiteinheit eine größere Zahl von Hölzern 2 in die Plattenverleimmaschine gefördert werden soll. Die beiden Auswerfer 31, 15 sind in der Ausgangslage so eingestellt, daß die Hölzer 2 im Bereich vor den Fingern 33 der beiden Auswerfer 31, 15 (Fig. 6) transportiert werden können, bis sie an der Anschlagplatte 18 des Anschlages 14 mit ihrer Stirnseite zur Anlage kommen. Anschließend werden die Schlitten 21, 21' der Auswerfer 31, 15 in Verschieberichtung 28 verfahren, wobei die Finger 33 das jeweilige Holz 2 an seiner Längsseite mitnehmen und auf den Querförderer 10 schieben, bis das Holz an das dort bereits gebildete Paket 11 angelegt wird. Die Kolbenstangen 24 der beiden Auswerfer 31, 15 werden aus den Zylindern 25 herausgefahren. Beim Rückhub wird der Arm 19 mit der Kolben-Zylinder-Einheit 38 um die senkrecht zur Verschieberichtung 28 liegende Achse 20 aufwärts geschwenkt. In dieser hoch geschwenkten Lage werden die Schlitten 21 der beiden Auswerfer 15, 31 zurückgefahren. Dadurch ist es möglich, bereits während dieses Rückhubes ein neues Holz 2 mittels der Transporteinrichtung 6 einzufahren, so daß dieses bereits an der Anschlagplatte 18 des Anschlages 14 anliegt, wenn die Schlitten 21 der beiden Auswerfer 15, 31 in ihre Ausgangslage (Fig. 6) zurückgefahren sind. Die Arme 19 werden in der Ausgangslage durch die Kolben Zylinder-Einheit 38 wieder nach unten geschwenkt. Nunmehr kann in der beschriebenen Weise das nächste Holz auf den Querförderer 10 verschoben werden.

Der Schieber 9 wird erst dann mittels des Kettentriebes 29 verschoben, wenn auf dem Querförderer 10 das komplette Paket 11 zusammengestellt worden ist. Dann werden die Schlitten 21, 21' des Anschlages 14 und der Auswerfer 15, 31 so weit auf den Linearführungen 22 verschoben, daß die Anschlagplatte 18 sowie die Finger 33 im Uhrzeigersinn um die jeweilige Achse 20 hochschwenken. Dann kann der Schieber 9 zum Paket 11 verschoben werden, um dieses in die Presse 12 zu verschieben.

Damit der Anschlag 14 und die Auswerfer 15, 31 einfach auf die Holzlänge eingestellt werden können, ist eine Kette 34 vorgesehen, die sich senkrecht zur Kette 29 sowie zu den Linearführungen 22 erstreckt. Der Anschlag 14 und der Auswerfer 31 sind fest an der Kette 34 angehängt. Darum werden sie durch die Kette 34 gleichzeitig längs der Linearführung 16 verstellt. Der Auswerfer 15 hat einen Indexbolzen 35, der vorzugsweise pneumatisch betätigbar ist und in die Kette 34 eingeklinkt werden kann.

Zum Verstellen fährt zunächst die gesamte Einheit 14, 15, 31 in die eine Endlage der Anschlageinrichtung 5. Der Indexbolzen 35 des Auswerfers 15 wird eingefahren, so daß der Auswerfer 15 von der Kette 34 entkoppelt ist. Nunmehr wird die Kette 34 angetrieben, wodurch der Anschlag 14 und der Auswerfer 31 auf die entsprechende Längenposition des Holzes 2 verstellt werden. Da der Indexbolzen 35 zurückgefahren ist, bleibt der Auswerfer 15 während dieses Einstellvorganges auf der Linearführung 16 stehen. Sobald der Anschlag 14 und der Auswerfer 31 verstellt sind, wird der Indexbolzen 35 ausgefahren und damit der Auswerfer 15 mit der Kette 34 verbunden. Dadurch wird der Auswerfer 15 wieder von der Kette 34 mitgenemmen, wenn die gesamte Einheit 14, 15, 31 auf die Auswurfposition gefahren wird. Der Indexbolzen 35 ist in einem Halter 36 untergebracht (Fig. 3), der an der vom Auswerfer 31 abgewandten Seite des Auswerfers 15 angeordnet ist. Der Halter 36 ist vorteilhaft lösbar mit dem Träger 27 verbunden, so daß er bei Bedarf einfach ausgewechselt werden kann. Auf dem Halter 36 ist eine Steuereinrichtung 37 vorgesehen, mit welcher der Indexbolzen 35 betätigt werden kann.

## Patentansprüche

1. Anschlageinrichtung für eine Plattenverleimmaschine, mit wenigstens einem Anschlag für Hölzer und wenigstens einem Auswerfer, mit dem die Hölzer quer zu ihrer Zuführrichtung verschiebbar sind,
**dadurch gekennzeichnet, daß** der Anschlag (14) wenigstens ein Anschlagelement (18) aufweist, das in Auswerfrichtung (28) verschiebbar und um eine quer zur Auswerfrichtung (28) liegende Achse (20) schwenkbar ist.

2. Anschlageinrichtung nach Anspruch 1,
**dadurch gekennzeichnet, daß** das Anschlagelement (18) an einem Arm (19) vorgesehen ist, der um die Achse (20) schwenkbar ist.

3. Anschlageinrichtung nach Anspruch 2,
**dadurch gekennzeichnet, daß** der Arm (19) an einem Schlitten (21) angelenkt ist, der längs einer in Auswerfrichtung (28) sich erstreckenden Linearführung (22) des Anschlages (14) verschiebbar ist.

4. Anschlageinrichtung nach Anspruch 2 oder 3,
**dadurch gekennzeichnet, daß** am Arm (19) eine Kolbenstange (24) einer Kolben-Zylinder-Anordnung (25) angreift, die sich in Auswerfrichtung (28) erstreckt.

5. Anschlageinrichtung nach einem der Ansprüche 1 bis 4,
**dadurch gekennzeichnet, daß** der Anschlag (14) durch den Auswerfer (9) verschiebbar ist.

6. Anschlageinrichtung nach einem der Ansprüche 1 bis 5,
**dadurch gekennzeichnet, daß** das Anschlagelement (18) am Ende seines Verfahrweges aus dem Bewegungsweg des Auswerfers (9) verstellbar ist.

7. Anschlageinrichtung, insbesondere nach einem der Ansprüche 1 bis 6,
**dadurch gekennzeichnet, daß** der Anschlag (14) und der Auswerfer (31) gemeinsam mittels wenigstens eines Antriebes (34) quer zur Auswerfrichtung (28) verstellbar sind, und daß wenigstens ein weiterer Auswerfer (15) mit dem Antrieb (34) kuppelbar und von ihm entkuppelbar ist.

8. Anschlageinrichtung nach Anspruch 7,
**dadurch gekennzeichnet, daß** der weitere Auswerfer (15) wenigstens ein Kupplungselement (35), vorzugsweise einen Indexbolzen, aufweist.

9. Anschlageinrichtung nach Anspruch 8,
**dadurch gekennzeichnet, daß** das Kupplungselement (35) pneumatisch verstellbar ist.

10. Anschlageinrichtung nach einem der Ansprüche 7 bis 9,
**dadurch gekennzeichnet, daß** der Antrieb (34) eine Kette aufweist, in die das Kupplungselement (35) einhängbar ist.

11. Anschlageinrichtung nach einem der Ansprüche 7 bis 10,
**dadurch gekennzeichnet, daß** der Anschlag (14) und die beiden Auswerfer (15, 31) auf einer gemeinsamen Linearführung (16) quer zur Auswerfrichtung (28) verstellbar sind.

12. Anschlageinrichtung nach einem der Ansprüche 7 bis 11,
**dadurch gekennzeichnet, daß** die beiden Auswerfer (15, 31) jeweils wenigstens ein Auswerfelement (33), vorzugsweise einen Auswerffinger, aufweisen.

13. Anschlageinrichtung nach Anspruch 12,
**dadurch gekennzeichnet, daß** in Auswerfrichtung (28) hinter dem Auswerfelement (33) ein Schieber (9) angeordnet ist.

14. Anschlageinrichtung nach einem der Ansprüche 7 bis 13,
**dadurch gekennzeichnet, daß** der Anschlag (14) und der eine Auswerfer (31) miteinander verbunden sind.

15. Anschlageinrichtung nach einem der Ansprüche 12 bis 14,
**dadurch gekennzeichnet, daß** das Auswerfelement (33) am Arm (19) der Auswerfer (15, 31) vorgesehen ist.

16. Anschlageinrichtung nach einem der Ansprüche 7 bis 15,
**dadurch gekennzeichnet, daß** der Abstand zwischen den Auswerfern (15, 31) einstellbar ist.

17. Anschlageinrichtung nach Anspruch 16,
**dadurch gekennzeichnet, daß** der weitere Auswerfer (15) durch Ausklinken des Kupplungselementes (35) aus der Kette zur Abstandsveränderung vom Antrieb (34) entkuppelbar ist.
